## Europäisches Patentamt
## European Patent Office
## Office européen des brevets

(19)

(11) Veröffentlichungsnummer: **0 092 648**

**B1**

(12)

# EUROPÄISCHE PATENTSCHRIFT

(45) Veröffentlichungstag der Patentschrift:
**23.07.86**

(51) Int. Cl.⁴: **C 03 B 37/16**

(21) Anmeldenummer: **83101270.3**

(22) Anmeldetag: **10.02.83**

(54) **Verfahren und Vorrichtung zum Trennen von Lichtwellenleiterfasern.**

(30) Priorität: **22.04.82 DE 3214872**

(43) Veröffentlichungstag der Anmeldung:
**02.11.83 Patentblatt 83/44**

(45) Bekanntmachung des Hinweises auf die Patenterteilung:
**23.07.86 Patentblatt 86/30**

(84) Benannte Vertragsstaaten:
**AT BE CH DE FR GB IT LI LU NL SE**

(56) Entgegenhaltungen:
**EP-A-0 010 782**
**FR-A-2 369 222**
**FR-A-2 445 302**
**GB-A-2 046 242**

(73) Patentinhaber: **Schiederwerk Günter Schmidt KG Fabrik für Apparate der Fernmelde- und Elektrotechnik, Solgerstrasse 21, D-8500 Nürnberg 81 (DE)**

(72) Erfinder: **Schwenda, Gerhard, Fliederweg 4, D-8501 Grosshabersdorf (DE)**
Erfinder: **Orendt, Alfred, Königshammer Strasse 31, D-8500 Nürnberg 50 (DE)**

(74) Vertreter: **Kessel, Egbert, Dipl.- Ing., Patentanwälte Dr.jur. Dipl.- Ing. W. Böhme Dipl.- Ing. E. Kessel Dipl.- Ing. V. Böhme Karolinenstrasse 27, D-8500 Nürnberg (DE)**

EP 0 092 648 B1

### Beschreibung

Die Erfindung geht von einem Verfahren der im Obergriff des Anspruchs 1 angegebenen Art aus, wie es z.B. aus der FR-A-2 369 222 bekannt ist, bzw. von einer Vorrichtung gemäß dem Obergriff des Anspruchs 2, entsprechend der EP-A -0 010 782.

In der Lichtwellenleitertechnik werden hohe Anforderungen an die Beschaffenheit der Faserstirnflächen gestellt, um an den Verbindungsstellen der Faser günstige Dämpfungswerte zu erzielen. Die Faserstirnflächen sollen rechtwinklig zur Faser-Längsachse verlaufen und keine nennenswerten Unebenheiten aufweisen.

Aus diesem Grund kommt dem Trennen der Fasern besondere Bedeutung zu. Dabei treten Schwierigkeiten einmal dadurch auf, daß das amorphe Material Glas beim Trennen - anders als bsp. Kristalle - keinen Gesetzmäßigkeiten unterliegt; der Verlauf der Trennfläche beim Brechen oder Relßen der Faser läßt sich nicht exakt vorherbestimmen, es kann zum willkürlichen Absplittern von Glasteilchen kommen usw. Eine andere Schwierigkeit ist durch den geringen Durchmesser vor allem dünner Fasern von etwa 100 μ bedingt, der diese beim Trennvorgang schwer handhabbar macht.

Ein Trennen durch Schneiden bzw. Abscheren mittels einer Schliescheibe, eines Seltenschneiders, einer Schneidzange od.dgl. läßt Faserstirnflächen entstehen, die den eingangs genannten Anforderungen nicht entsprechen; sie weisen erhebliche Unebenheiten bzw. Riefen auf. Diese Unebenheiten bzw. Riefen müssen durch eine besondere Nachbehandlung (Polleren) beseitigt werden, was vor allem kostenintensiv ist.

Um ohne eine solche Nachbehandlung auszukommen, werden in der Praxis vorrangig zwei Verfahren angewandt. Bei dem einen Verfahren wird die Faser tangential eingekerbt und dann durch Beigen oder axiales Ziehen getrennt, während bei dem anderen Verfahren durch einen Lichtbogen Spannungsrisse in der Faseroberfläche erzeugt werden, um das Trennen dann wieder durch axialen Zug zu bewirken. Die bei derart getrennten Fasern erzeugten Stirnflächen sind zwar in der Regel ohne Nachbehandlung brauchbar, liefern jedoch sehr weit differierenden Dämpfungswerte, fallen also in einem großen Streubereich an, da die Trennfläche auch in diesem Fall nicht stets genau definiert verläuft.

Das gilt auch für das aus der FR-A-2 369 222 (s. insbesondere deren Fig. 5 und 6) bekannte Verfahren, bei dem die durch die Öffnung einer Blende geführte, vorund hinter der Blende in einer Klemme gehaltene Faser mit einer vorbestimmten Kraft P gegen den als Schneidkante ausgebildeten Innenrand der Blendeöffnung gedrückt wird. Zu diesem Zweck führen die Klemmen mit der Faser gegenüberder ortsfesten Blende eine Exzenterbewegung aus derart, daß die Kraft P ständigihre Richtung ändert und jeweils senkrecht zur Tangente im Berührungspunkt Faser-Schneidkante verläuft; die Faserlängsachse wird dabei auf einer Kreisbahn bewegt bzw. beschreibt einen Kreis. Nachteilig ist, daß aufgrund der im Bereich der Schneidkante notwendigen Auslenkung der Faser und der nicht möglichen Anbringung eines dem Ritzpunkt gegenüberliegenden Widerlagers möglicherweise einevorzeitige Einleitung des Faserbruchs herbeigeführt wird, so daß es gar nicht erst zu einerumlaufenden Ritzung kommt; die Mänge, die als Folge eines nach tangentialer Einkerbung erfolgenden Trennens der Faser auftreten, sind oben dargelegt. Darüber hinaus lassen sich durch die Zwei-Punkt-Klemmung der Faser Toleranzen zwischen den beiden Klemmpunkten nicht vermelden, so daß die Schneidkante nicht genau rechtwinklig zur Faserlängsachse angeordnet ist, was schrägverlaufende Faserstirnfläche enstehen läßt.

Schließlich ist aus der EP-A-0 010 782 eine Vorrichtung der im Obergriff des Anspruchs 2 angegebenen Art bekannt. Bei dieser bekannten Vorrichtung wird die drehfest gehaltene Faser von einer im axialen Abstand von der Klemmhalterung angeordneten Schneideinrichtung mit einer Ritzung versehen, indem das freie Ende der Faser unter Fliehkraftwirkung nach außen abgebogen und dabei gegen die Schneidkante der Schneideinrichtung zur Anlage gebracht und auf ihr bis zum Bruch entlangbewegt wird. Auch dabei kommt es also zu einer Auslenkung der Faser mit den nachteiligen Folgen, wie sie oben in Verbindung mit der FR-A-2 -369 222 beschreiben worden sind.

Der Erfindung liegt die Aufgabe zugrunde, ein Verfahren und eine Vorrichtung zum Trennen von Lichtwellenleiterfasern zu schaffen, mittels welchem bzw. mittels welcher sich ohne Nachbehandlung Faserstirnflächen erzeugen lassen, die Verbindungen mit Dämpfungswerten < 0,5 db gewährleisten.

Zur Lösung dieser Aufgabe sind die im Kennzeichenteil des Anspruchs 1 angegebenen Verfahrensmerkmale und mindestens die im Kennzeichenteil des Anspruchs 2 angegebenen Gestaltungsmerkmale vorgesehen; Gegenstand der Unteransprüche 3 bis 21 bilden für die Aufgabenlösung vorteilhafte und förderliche Weiterbildungen der Vorrichtung gemäß Anspruch 2.

Beim Trennen nach dem erfindungsgemäßen Verfahren und mit Hilfe der erfindungsgemäßen Vorrichtung wird die Faserstirnfläche in aller Regel rechtwinklig zur Faserlängsachse verlaufen und ebenflächig sein. Das Drehen der Faser um ihre Längsachse am feststehenden Ritzwerkzeug entlang hat gegenüber dem Umlaufen des Ritzwerkzeugs um die feststehende Faser den Vorteil stets gleichbleibender Ritztiefe, der Vermeidung eines spiraligen Ritzverlaufs und der Unschädlichmachung eines radialen Versatzes der Faser; in konstruktiver Hinsicht wirkt es sich günstig aus, daß sowohl das Ritzwerkzeug als auch das diesem gegenüberliegende Widerlager nicht auf eine Drehbewegung ausgelegt zu werden braucht.

In der Zeichnung ist ein bevorzugtes Ausführungsbeispiel der erfindungsgemäßen Vorrichtung dargestellt.

Es zeigen

Fig. 1 eine Draufsicht auf die Vorrichtung mit abgenommenem Gehäusedeckel,

Fig. 2 eine Ansicht gemäß Fig. 1 mit geschlossenem Gehäusedeckel,

Fig. 3a und 3b Ansichten der beiden Gehäusestirnflächen,

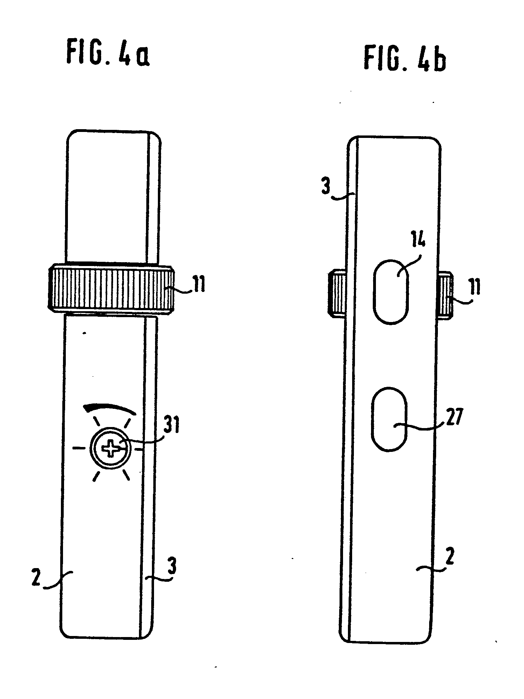

Fig. 4a und 4b Ansichten der beiden Gehäuselängsseiten und

Fig. 5a und 5b Schnittansichten des Antriebsrads mit geöffneter und geschlossener Spannvorrichtung.

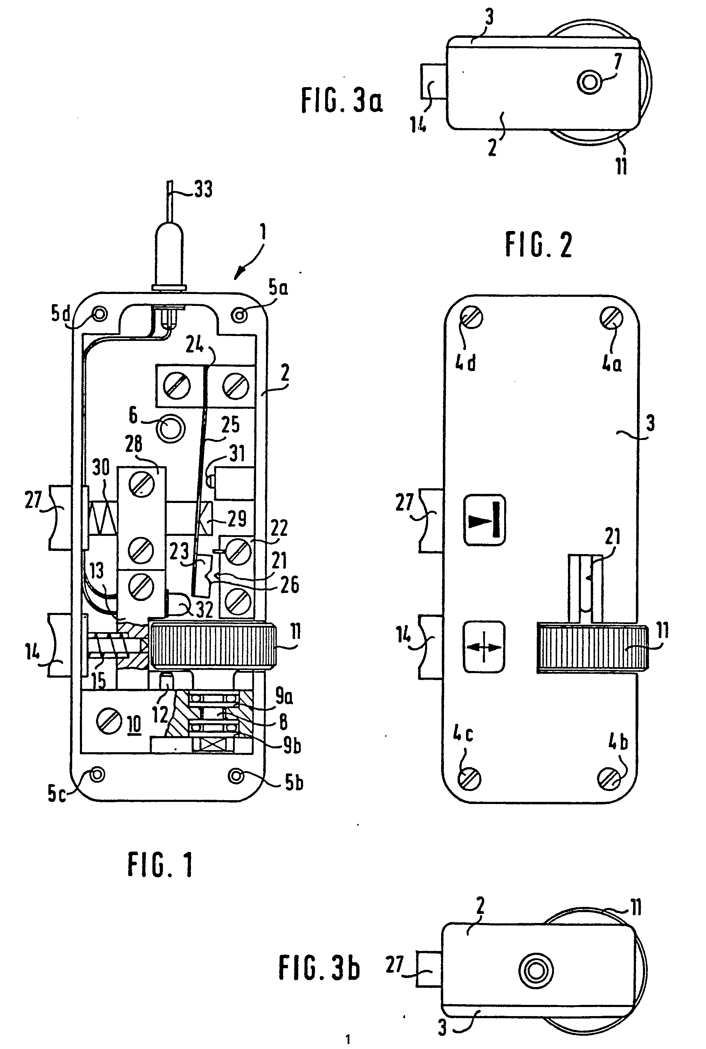

Die Vorrichtung 1 ist in einem rechteckigen Gehäuse 2 aufgebaut, das mittels eines Deckels 3 verschließbar ist. In der Schließstellung ist der Deckel 3 durch Schrauben 4a-4d, die in Bohrungen 5a - 5d des Gehäuses 2 eingreifen, an diesem gehalten. Mit 6 ist eine den Gehäuseboden durchdringende Gewindebohrung zur Aufnahme eines Kugelgelenkkopfs bezeichnet, der die Verbindung zu einem nicht dargestellten Basisteil bildet. Die in Fig. 2 untere Gehäusestirnfläche (s. Fig. 3a) ist von einer als Faser-Zuführung gedachten Bohrung 7 durchdrungen.

Die Bohrung 7 mündet in eine Hohlwelle 8 ein, die mittels zweier Axial-Rillen-Kugellager 9a und 9b in einem Lagerbock 10 drehbar gehalten und an ihrem der Einmündung der Hohlwelle 8 gegenüberliegenden Ende mit einem Antriebsrad 11 verschraubt ist. Mit 12 ist eine an der Seitenfläche des Antriebsrads 11 anliegende Überdrehsicherung bezeichnet, die als gefederte Kugelschraube, Zahnkranz mit Sperrklinke od.dgl. ausgebildet sein kann.

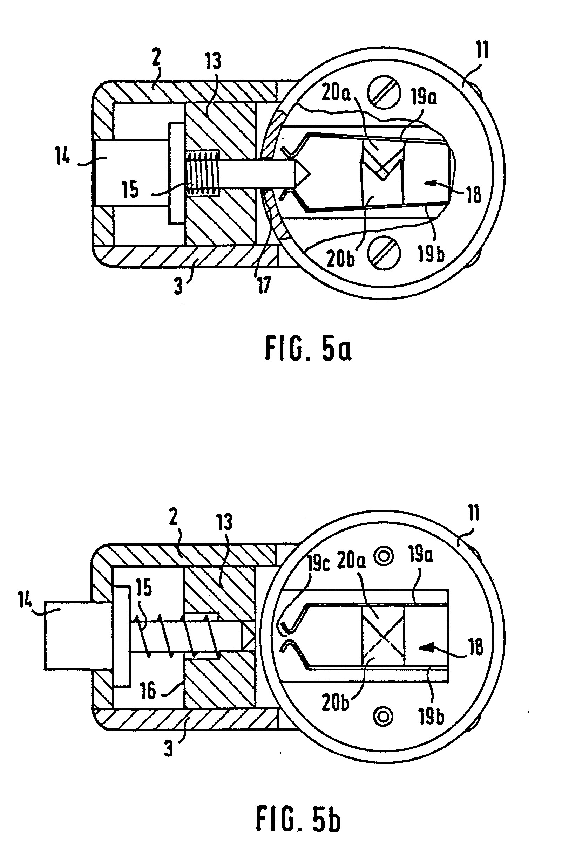

In einem weiteren Lagerbock 13 ist ein Betätigungsglied 14 in Bezug auf das Antriebsrad 11 radial verschiebbar gelagert. Eine Verstellung des Betätigungsglieds 14 aus der in Fig. 1 und 5b gezeigten Ruhestellung bewirkt die Spannung einer Rückstellfeder 15 und ist nur bis zum Anschlag 16 (s. Fig. 5a) möglich, womit die Betriebsstellung des Betätigungsglieds 14 erreicht ist; bei Aufhören der Beaufschlagung kehrt das Betätigungsglied 14 unter der Wirkung der Rückstellfeder 15 selbsttätig in die Ruhestellung zurück. Eine weitere Voraussetzung für die Überführung des Betätigungsglieds 14 in die Betriebsstellung (s. Fig. 5a) besteht darin, daß eine im Antriebsrad 11 vorgesehene Bohrung 17 mit dem Betätigungsglied 14 fluchtet, so daß dieses in das Antriebsrad 11 eindringen kann.

Im Inneren des Antriebsrads 11 ist eine Spannvorrichtung 18 untergebracht, mittels welcher die Faser verdrehsicher gehalten wird. Die Spannvorrichtung 18 besteht aus zwei mit Abstand voneinander angeordneten, im entspannten Zustand etwa parallel zueinander verlaufenden Blattfedern 19a und 19b, die an ihrem vom Betätigungsglied 14 abgewandten Ende eingespannt sind und mit ihrem dem Betätigungsglied 14 zugewandten Ende eine Öffnung 19c bilden, die in der Betriebsstellung des Betätigungsglieds 14 mit der Bohrung 17 des Antriebsrads 11 korrespondiert.

Auf den einander zugekehrten Innenseiten der Blattfedern 19a und 19b ist etwa im mittleren Bereich je ein kammartig ausgebildetes Lamellenprisma 20a bzw. 20b angeordnet, das in der Schließstellung (s. Fig. 5b) mit dem gegenüberliegenden Prisma verzahnt ist. Wie in Fig. 5a dargestellt, dringt das beaufschlagte Betätigungsglied 14 durch die Bohrung 17 des Antriebsrads 11 in die Öffnung 19c ein und spreizt so die Blattfedern 19a und 19b, wodurch die Spannvorrichtung 18 in die Offenstellung einrückt.

In der Verlängerung der durch die Bohrung 7, die Hohlwelle 8 und die offene Spannvorrichtung 18 gehenden Achse befindet sich ein Ritzwerkzeug 21, das in einem weiteren Lagerbock 22 ortsfest gehalten ist; die Schneidkante ist rechtwinklig zu der vorgenannten Achse angeordnet. Dem Ritzwerkzeug 21 gegenüber befindet sich ein Widerlager 23, das am freien Ende einer bei 24 einseitig eingespannten Blattfeder 25 befestigt ist. Das Widerlager 23 weist eine in Richtung der vorgenannten Achse verlaufende, in der Betriebsstellung die Faser aufnehmende V-Nut auf, zu der eine der Schneidkante gegenüberliegende weitere V-Nut 26 rechtwinklig angeordnet ist.

Die Überführung der Blattfeder 25 und damit des Widerlalagers 23 aus der in Fig. 1 gezeigten Ruhestellung, in der die Blattfeder 25 gespannt ist, in die Betriebsstellung, in der das Widerlager 23 eine die Spannvorrichtung 18 durchdringende und von dieser drehfest gehaltene Faser gegen die Schneidkante des Ritzwerkzeugs 21 anpreßt, geschieht mittels eines Betätigungsglieds 27. Das Betätigungsglied 27 ist in einem weiteren Lagerbock 28 axialverschieblich geführt und weist einen Umgriff 29 auf, auf dem die Blattfeder 25 aufliegt; es ist mit einem Rückstellorgan 30 versehen, das die Blattfeder 25 in der Ruhestellung gespannt hält und bei Aufhören der Beaufschlagung für deren zwangsweise Rückführung in die Ruhestellung sorgt.

Mit 31 ist ein Regelorgan zur Einstellung des auf die Faser wirkenden Anpreßdrucks des Widerlagers 23 angedeutet; 32 stellt eine über eine Zuleitung 33 gespeiste Beleuchtungsvorrichtung dar. Der Überdrehsicherung 12 kommt die Aufgabe zu dafür zu sorgen, daß das Antriebsrad 11 mit der in der Spannvorrichtung 18 gehaltenen Faser nur eine Umdrehung macht.

**Patentansprüche**

1. Verfahren zum Trennen von Lichtwellenleiterfasern, bei welchem die eingespannte, axial spielfrei gehaltene Faser an der für die Trennung vorgesehenen Stelle mittels eines feststehenden Ritzwerkzeugs (21) mit einer sich über den gesamten Faserumfang erstreckenden und auf einer zur Faserlängsachse vertikalen Ebene liegenden Ritzung versehen und anschließend durch Krafteinwirkung getrennt wird, dadurch gekennzeichnet, daß die Faser um ihre ortsfeste Längsachse gedreht und dabei der Einwirkung des Ritzwerkzeugs (21) ausgesetzt wird.

2. Vorrichtung zur Durchführung des Verfahrens nach Anspruch 1, die eine einzige Spannvorrichtung (18) zur axial spielfreien Halterung der Faser aufweist, der mit axialem Abstand ein feststehendes Ritzwerkzeug (21) zugeordnet ist, dessen Schneidkante rechtwinklig zur Faserlängsachse verläuft, dadurch gekennzeichnet, daß die Spannvorrichtung (18) drehbar ist und ihre Drehachse mit der Faserlängsachse zusammenfällt.

3. Vorrichtung nach Anspruch 2, dadurch gekennzeichnet, daß die Spannvorrichtung (18) aus zwei ineinandergreifenden Prismen (20a, 20b) besteht, die auf Blattfedern (19a, 19b) gelagert sind.

4. Vorrichtung nach Anspruch 3, dadurch gekennzeichnet, daß jedes Prisma (20a bzw. 20b) mehrere kammartig angeordnete Lamellen aufweist, in deren Zwischenräume die entsprechenden Lamellen des anderen Prismas (20b bzw. 20a) eingreifen.

5. Vorrichtung nach Ansprüchen 3 und 4, dadurch gekennzeichnet, daß die Blattfedern (19a, 19b) in der Schließstellung der Prismen (20a, 20b) entspannt sind.

6. Vorrichtung nach Anspruch 5, dadurch gekennzeichnet, daß die Blattfedern (19a, 19b) zwecks Überführens der Prismen (20a, 20b) in die Offenstellung mittels eines Betätigungsglieds (14) spannbar sind.

7. Vorrichtung nach den Ansprüchen 3 - 6. dadurch gekennzeichnet, daßdie Spannvorrichtung (18) in einem Antriebsrad (11) untergebracht ist, dessen Drehachse mit der zentralen Durchgangsachse der Prismen (20a, 20b) zusammenfällt.

8. Vorrichtung nach Anspruch 7, dadurch gekennzeichnet, daß an der dem Ritzwerkzeug (21) abgewandt Seite des Antriebsrad (11) eine Hohlwelle (8) ansitzt, auf der zwei mit axialem Abstand angeordnete Axial-Rillen-Kugellager (9a, 9b) aufsitzen, mittels welcher das Antriebsrad (11) axial spielfrei in einem Lagerbock (10) gehalten ist.

9. Vorrichtung nach Anspruch 8, dadurch gekennzeichnet, daß an dem Lagerbock (10) eine gegen die zugewandte Seitenfläche des Antriebsrads (11) anliegende Überdrehsicherung (12) vorgesehen ist.

10. Vorrichtung nach Anspruch 6 und mindestens einem der folgenden, dadurchgekennzeichnet, daß in dem Antriebsrad (11) ein radialer Durchgang (17) für das Betätigungsglied (14) vorgesehen ist.

11. Vorrichtung nach Anspruch 10, dadurch gekennzeichnet, daß das Betätingungsglied (14) in einem Lagerbock (13) gehalten und in diesem zwischen einer Ruheund einer Betriebstellung axial verschiebbar ist, wobei es in der Betriebsstellung in das Antriebsrad (11) eindringt und die Blattfedern (19a, 19b) bei gleichzeitiger Öffnung der Prismen (20a, 20b) spannt, aus der es bei Aufhören seiner Beaufschlagung mittels eines Rückstellorgans (15) selbsttätig in die Ruhestellung zurückkert, in der es das Antriebsrad (11) zur Drehung freigibt.

12. Vorrichtung nach Anspruch 11, dadurch gekennzeichnet, daß der Verschiebeweg des Betätigungsglieds (14) in die Betriebsstellung durch einen Anschlag (16) begrenzt ist.

13. Vorrichtung nach Anspruch 2 und mindestens einem der folgenden, dadurchgekennzeichnet, daß das Ritzwerkzeug (21) ortsfest gelagert ist, wobei der Abstand zwischen seiner Schneidkante und der Faserachse genau definiert ist.

14. Vorrichtung nach Anspruch 13, dadurch gekennzeichnet, daß gegenüber der Schneidkante des Ritzwerkzeugs (21) ein von einer elastischen Rückstellkraft beaufschlagtes Widerlager (23) angeordnet ist, das eine in Richtung der Faserlängsachse verlaufende V-Nut aufweist.

15. Vorrichtung nach Anspruch 14, dadurch gekennzeichnet, daß das Widerlager (23) eine weitere V-Nut (26) besitzt, die zur ersten V-Nut rechtwinklig verläuft und der Schneidkante des Ritzwerkzeugs (21) genau gegenüberliegt.

16. Vorrichtung nach den Ansprüchen 14 und 15, dadurch gekennzeichnet, daß das Widerlager (23) am freien Ende einer einseitig eingespannten Blattfeder (25) gelagert ist.

17. Vorrichtung nach Anspruch 16, dadurch gekennzeichnet, daß der Blattfeder (25) ein in einem Lagerbock (28) axial verschiebbares Betätigungsglied (27) zugeordnet ist, mittels welchem die Blattfeder (25) zwischen einer Ruhestellung, in der sie gespannt ist, und einer Betriebsstellung verstellbar ist, in der sie gegen die Faser zur Anlage kommt und diese mit einem genau einstellbaren Druck gegen die Schneidkante des Ritzwerkzeugs (21) anpreßt, bis sie bei Aufhören der Beaufschlagung des Betätigungsglieds (27) unter der Wirkung eines Rückstellorgans (30) selbsttätig in die Ruhestellung zurückkehrt.

18. Vorrichtung nach Anspruch 17, dadurch gekennzeichnet, daß der Anpreßdruck der Blattfeder (25) mittels eines Regelorgans (31) steuerbar ist.

19. Vorrichtung nach mindestens einem der vorhergehenden Ansprüche, dadurch gekennzeichnet, daß in dem Bereich, in dem die Ritzung erfolgt, eine Beleuchtungsvorrichtung (32) angeordnet ist.

20. Vorrichtung nach den vorhergehenden Ansprüchen, dadurch gekennzeichnet, daß sie in einem mittels Deckel (3) verschließbaren Gehäuse (2) angeordnet ist,aus dem die Betätigungsglieder (14, 27) und das Antriebsrad (11) vorstehen und das eine in die Hohlwelle (8) einmündende Faser-Zuführung (7) aufweist.

21. Vorrichtung nach Anspruch 20, dadurch gekennzeichnet, daß in dem Deckelbereich, unterhalb welchem die Ritzung erfolgt, ein Sichtfenster vorgesehen ist.

## Claims

1. A method of cutting optical fibres, in which the clamped fibre held without axial play is given, at the place provided for cutting and by means of a stationary scoring tool (21), a score which extends over the entire periphery of the fibre and which lies in a plane at right angles to the longitudinal axis of the fibre, and the fibre is then cut by the application of force, characterized in that the fibre is turned about its fixed longitudinal axis and is subjected to the action of the scoring tool (21).

2. An apparatus for performing the method according to Claim 1, which comprises a single clamping apparatus (18) for holding the fibre without axial play, with which is associated a stationary scoring tool (21) at an axial distance, the cutting edge of which extends at right angles to the longitudinal axis of the fibre, characterized in that the clamping apparatus (18) is rotatable and its axis of rotation coincides with the longitudinal axis of the fibre.

3. An apparatus according to Claim 2, characterized in that the clamping apparatus (18) comprises two intermeshing prisms (20a, 20b) which are mounted on leaf springs (19a, 19b).

4. An apparatus according to Claim 3, characterized in that each prism (20a and 20b respectively) comprises a plurality of bars which are arranged in the manner of a comb and in the interspaces of which the corresponding bars of the other prism (20b and 20a respectively) engage.

5. An apparatus according to Claims 3 and 4, characterized in that the leaf springs (19a, 19b) are relaxed in the closed position of the prisms (20a, 20b).

6. An apparatus according to Claim 5, characterized in that, in order to bring the prisms (20a, 20b) into the open position, the leaf springs (19a, 19b) are tensionable by means of an actuating member (14).

7. An apparatus according to Claims 3 to 6, characterized in that the clamping apparatus (18) is disposed in a drive wheel (11), the axis of rotation of which coincides with the central through axis of the prisms (20a, 20b).

8. An apparatus according to Claim 7, characterized in that a hollow shaft (8), on which are mounted two axial-groove ball bearings (9a, 9b) which are arranged at an axial distance and by means of which the drive wheel (11) is held without axial play in a bearing block (10), is disposed on the side of the drive wheel (11) remote from the scoring tool (21).

9. An apparatus according to Claim 8, characterized in that a means (12) for preventing overspeeding which bears against the facing lateral surface of the driving wheel (11) is provided on the bearing block (10).

10. An apparatus according to Claim 6 and at least one of the following, characterized in that a radial passage (17) for the actuating member (14) is provided in the driving wheel (11).

11. An apparatus according to Claim 10, characterized in that the actuating member (14) is held in a bearing block (13) and is axially displaceable therein between a rest position and an operative position, and in the operative position it penetrates into the driving wheel (11) and tensions the leaf springs (19a, 19b) at the same time as the prisms (20a, 20b) are opened, from which [position] it is automatically returned when its action ceases by means of a restoring means (15) into the rest position, in which it releases the driving wheel (11) for rotation.

12. An apparatus according to Claim 11, characterized in that the displacement path of the actuating member (14) into the operative position is limited by a stop (18).

13. An apparatus according to Claim 2 and at least one of the following, characterized in that the scoring tool (21) is mounted stationarily, the distance between its cutting edge and the fibre axis being precisely defined.

14. An apparatus according to Claim 13, characterized in that an abutment (23), which is acted upon by a resilient restoring force and which comprises a V-groove extending in the direction of the longitudinal axis of the fibre, is disposed opposite the cutting edge of the scoring tool (21).

15. An apparatus according to Claim 14, characterized in that the abutment (23) comprises a further V-groove (28) which extends at right angles to the first V-groove and is exactly opposite the cutting edge of the scoring tool (21).

16. An apparatus according to Claims 14 and 15, characterized in that the abutment (23) is mounted at the free end of a leaf spring (25) clamped at one end.

17. An apparatus according to Claim 18, characterized in that the leaf spring (25) has associated with it an actuating member (27) which is axially displaceable in a bearing block (28) and by means of which the leaf spring (25) is displaceable between a rest position, in which it is clamped, and an operative position, in which it comes to rest against the fibre and presses the latter with a precisely adjustable pressure against the cutting edge of the scoring tool (21), until it automatically returns to the rest position under the action of a restoring means (30) when the action of the actuating member (27) ceases.

18. An apparatus according to Claim 17, characterized in that the pressure of the leaf spring (25) is controllable by means of a control means (31).

19. An apparatus according to at least one of the preceding Claims, characterized in that a lighting apparatus (32) is disposed in the region in which the scoring takes place.

20. An apparatus according to the preceding Claims, characterized in that it is disposed in a casing (2) which is closable by means of covers (3) and from which the actuating members (14, 27) and the driving wheel (11) project and which comprises a fibre feed (7) opening into the hollow shaft (8).

21. An apparatus according to Claim 20, characterized in that a viewing window is provided in the cover region below which the scoring takes place.

## Revendications

1. Procédé pour le sectionnement de fibres conductrices d'ondes lumineuses, suivant lequel la fibre serrée, maintenue sans jeu axial, reçoit au moyen d'un outil de rayage fixe (21) à l'endroit prévu pour le sectionnement, une rayure située dans un plan perpendiculaire à l'axe longitudinal de la fibre et s'étendant sur tout son pourtour, le sectionnement ayant lieu ensuite par l'application d'une force, caractérisé par le fait que la fibre subit une rotation autour de son axe longitudinal fixe et se trouve en même temps soumise à l'action de l'outil de rayage (21).

2. Dispositif pour la mise en oeuvre du procédé selon la revendication 1, comprenant un seul dispositif de serrage (18) qui est destiné à maintenir sans jeu axial la fibre et auquel est associé, à distance axiale, un outil de rayage fixe (21) dont l'arête coupante s'étend perpendiculairement à l'axe longitudinal de la fibre, caractérisé par le fait que le dispositif de serrage (18) est rotatif et que son axe de rotation coïncide avec l'axe longitudinal de la fibre.

3. Dispositif selon la revendication 2, caractérisé par le fait que le dispositif de serrage (18) est constitué de deux prismes (20a, 20b) s'interpénétrant réciproquement, montés sur des lames de ressort (19a, 19b).

4. Dispositif selon la revendication 3, caractérisé par le fait que chaque prisme (20a ou 20b) présente plusieurs lamelles diposées à la manière d'un peigne dans les espaces intermédiaire duquel pénètrent les lamelles correspondantes de l'autre prisme (20b ou 20a).

5. Dispositif selon les revendications 3 et 4, caractérisé par le fait que les lames de ressort (19a, 19b) sont détendus dans la position de fermeture des prismes (20a, 20b).

6. Dispositif selon la revendication 5, caractérisé par le fait que les lames de ressort (19a, 19b) peuvent être tendus au moyen d'un élément d'actionnement (14) dans le but de transférer les prismes (20a, 20b) dans leur position d'ouverture.

7. Dispositif selon les revendications 3-6, caractérisé par le fait que le dispositif de serrage (18) est monté à l'intérieur d'une roue d'entraînement (11) dont l'axe de rotation coincide avec l'axe qui traverse les prismes (20a, 20b) en leur centre.

8. Dispositif selon la revendication 7, caractérisé par le fait que sur le côté éloigné de l'outil de rayage (21) la roue (11) comporte un arbre creux (8) sur lequel sont montées deux butées à billes (9a, 9b) disposées à distance axiale l'une de l'autre et au moyen desquelles la roue (11) est maintenue sans jeu axial dans un support (10).

9. Dispositif selon la revendication 8, caractérisé par le fait que sur le support (10) est prévue un élément (12) de limitation de rotation appliqué contre la surface latérale de la roue (11) tournée vers le support.

10. Dispositif selon la revendication 6 et l'une au moins des revendications suivantes, caractérisé par le fait que dans la roue d'entraînement (11) est prévu un passage radial (17) pour l'élément d'actionnement (14).

11. Dispositif selon la revendication 10, caractérisé par le fait que l'élément d'actionnement (14) est maintenu dans un support (13) dans lequel il est mobile axialement entre une position de repos et une position active, qu'en position active ledit élement (14) pénètre dans la roue d'entraînement (11) et tend les lames de ressort (19a, 19b) avec ouverture simultanée des prismes (20a, 20b), et lorsqu'il n'est plus sollicité est automatiquement ramené au moyen d'un organe de rappel (15) dans la position de repos dans laquelle il libère la rotation de la roue d'entraînement (11).

12. Dispositif selon la revendication 11, caractérisé par le fait que le trajet de déplacement l'élément d'actionnement (14) en direction de sa positionnement active est limité par une butée (16).

13. Dispositif selon la revendication 2 et l'une au moins des revendications suivantes, caractérisé par le fait que l'outil de rayage (21) est monté fixe, la distance entre son arête coupante et l'axe de la fibre étant définie avec précision.

14. Dispositif selon la revendication 13, caractérisé par le fait qu'en face de l'arête coupante de l'outil de rayage (21) est disposé un contre-appui (23) sollicité par une force de rappel élastique, contre-appui dans lequel est pratiquée une rainure en forme de V s'étendant dans le sens de l'axe longitudinal de la fibre.

15. Dispositif selon la revendication 14, caractérisé par le fait que dans le contre-appui (23) est pratiquée une autre rainure en forme de V (26) qui s'étend perpendiculairement à la première rainure en forme de V et qui est placée exactement en face de l'arête coupante de l'outil de rayage (21).

16. Dispositif selon les revendications 14 et 15, carctérisé par le fait que le contre-appui (23) est monté à l'extrémité libre d'une lame de ressort (25) encastrée d'un seul côté.

17. Dispositif selon la revendication 16, caractérisé par le fait qu'à la lame de ressort (25) est associé un élément d'actionnement (27) qui est mobile axialement à l'intérieur d'un support (28) et au moyen duquel la lame de ressort (25) est déplaçable entre une position de repos dans laquelle ledit ressort est tendu et une position active dans laquelle il est appliqué contre la fibre et presse celle-ci sous une pression réglable avec précision contre l'arête coupante de l'outil de rayage (21) jusqu'à ce que l'élément

**0 092 648**

d'actionnement (27), lorsqu'il n'est plus sollicité, retourne automatiquement dans sa position de repos sous l'effet d'un organe de rappel (30).

18. Dispositif selon la revendication 17, caractérisé par le fait que la pression d'application de la lames de ressort (25) est réglable au moyen d'un organe de réglage (31).

19. Dispositif selon l'une au moins des revendications précédentes, caractérisé par le fait que dans la zone dans laquelle a lieu le rayage, est disposé un dispositif d'éclairage (32).

20. Dispositif selon les revendications précédentes, caractérisé par le fait qu'il est disposé à l'intérieur d'un boîtier (2) qui peut être fermé par un couvercle (3) dont font saillie les éléments d'actionnement (14, 27) et la roue d'entraînement (11) et qui présente une amenée de fibre (7) débouchant dans l'arbre creux (8).

21. Dispositif selon la revendication 20, caractérisé par le fait que dans la zone du couvercle au-dessous de laquelle s'effectue le rayage, se trouve un regard.

FIG. 3a

FIG. 2

FIG. 1

FIG. 3b

FIG. 4a

FIG. 4b

FIG. 5a

FIG. 5b